Europäisches Patentamt

European Patent Office

Office européen des brevets

(11) Veröffentlichungsnummer: **0 319 685 B1**

# EUROPÄISCHE PATENTSCHRIFT

(12)

(45) Veröffentlichungstag der Patentschrift: **11.03.92**

(21) Anmeldenummer: **88117475.9**

(22) Anmeldetag: **20.10.88**

(51) Int. Cl.⁵: **F02M 35/10**

(54) **Ansauganlage für eine mehrzylindrige Brennkraftmaschine.**

(30) Priorität: **11.12.87 DE 3742057**

(43) Veröffentlichungstag der Anmeldung:
**14.06.89 Patentblatt 89/24**

(45) Bekanntmachung des Hinweises auf die
Patenterteilung:
**11.03.92 Patentblatt 92/11**

(84) Benannte Vertragsstaaten:
**DE ES FR GB IT NL SE**

(56) Entgegenhaltungen:
**EP-A- 0 024 606      DE-A- 3 420 703**
**DE-C- 3 641 812      DE-C- 3 742 057**
**FR-A- 685 860        GB-A- 287 812**
**US-A- 4 664 075**

(73) Patentinhaber: **Dr.Ing.h.c. F. Porsche Aktien-**
**gesellschaft**
**Porschestrasse 42**
**W-7000 Stuttgart 40(DE)**

(72) Erfinder: **Distelrath, Winfried, Dipl.-Ing. (FH)**
**Thaerstrasse 28**
**W-7000 Stuttgart 31(DE)**

EP 0 319 685 B1

**Beschreibung**

Die Erfindung betrifft eine Ansauganlage nach dem Oberbegriff des Patentanspruchs 1.

Eine bekannte Ansauganlage, DE-OS 34 20 703, umfasst einen Behälter mit einem ersten halbkugelförmigen Gehäuse, auf das ein zweites kegelförmiges Gehäuse aufgesetzt ist. An den Behälter sind einzelne Saugrohre herangeführt, die im Inneren des mit flüssigem Medium füllbaren Behälters verlaufen und zwar bis zum zweiten Gehäuse. Zwischen beiden Gehäusen ist offensichtlich eine Dichtwand vorgesehen. Dieser Ausführung haftet der Nachteil an, daß das Volumen im zweiten Gehäuse schwerlich ausreichen dürfte, um den pulsierenden Luftbedarf einer Brennkraftmaschine, beispielsweise mit vier Zylindern, funktionsgerecht bereitstellen zu können. Außerdem verursacht die Geometrie des kreisförmigen Drosselklappenstutzens und des zweiten kegeligen Gehäuses aufgrund der Geschwindigkeitsverteilung der Luft - am Rand langsam, in der Mitte schnell - Strömungsverluste, die das Leistungsverhalten der Brennkraftmaschine nachhaltig beeinträchtigen.

Aufgabe der Erfindung ist es, eine Brennkraftmaschinen-Ansauganlage zu schaffen, die bei räumlich günstiger Gestaltung und reduziertem Gewicht zur gasdynamischen Optimierung der Saugseite der Brennkraftmaschine beiträgt.

Erfindungsgemäß wird diese Aufgabe durch die kennzeichnenden Merkmale des Patentanspruchs 1 gelöst. Weitere, die Erfindung ausgestaltenden Merkmale sind in den Unteransprüchen enthalten.

Die mit der Erfindung hauptsächlich erzielten Vorteile sind darin zu sehen, daß durch die Kugelform des Sammlers die gasdynamischen Reibungsverluste beträchtlich reduziert werden, wodurch der Wirkungsgrad - Drehmoment, Verbrauch - der Brennkraftmaschine verbessert wird. Auch beansprucht der Kugel-Sammler bei gegebenem Volumen wenig Raum, was einerseits die Verlegung der gleich langen Saugrohre vereinfacht, und andererseits die Unterbringung von Nebenaggregaten der Brennkraftmaschine erleichtert. Durch das günstige Verhältnis Oberfläche zu Volumen bei diesem Sammler ist der Materialaufwand für die Ansauganlage geringer mit der Folge, daß letztere wenige Gewicht aufweist und einfacher herzustellen ist.

Die Ausrichtung der Saugrohre zum Kugelzentrum gewährleistet nicht nur gute Gasströmungsverhältnisse, sondern daß der Anschluß der Saugrohre am Sammler umlaufend gewünscht trichterförmig gestaltet werden kann. Durch die wechselweise Zuführung von Luft über die Saugrohre zu den Zylindern und zwar in Abhängigkeit der Zündfolge der Brennkraftmaschine wird erreicht, daß jedem Saugrohr beim Ansaugen das gesamte Kugelvolumen zur Verfügung steht, wodurch eine definiert gute Gemischverteilung erzielt wird. Anders ausgedrückt, eine gegenseitige Behinderung der Saugrohre durch ungleiche Abstände beispielsweise wie bei einer nichtkugeligen geometrischen Form eines Sammlers entfällt.

Darüber hinaus trägt die hängende Anordnung des Sammlers dazu bei, daß der Raum in der unmittelbaren Umgebung der Brennkraftmaschine gut nutzbar ist. Schließlich schafft die Verbindung der Ansauganlage mit dem Zylinderkopf und die Abstützung am Kraftfahrzeug eine entkoppelte Lagerung, was sich geräuschmindernd auswirkt.

In der Zeichnung werden Ausführungsbeispiele der Erfindung gezeigt, die nachstehend näher beschrieben sind.
Es zeigt

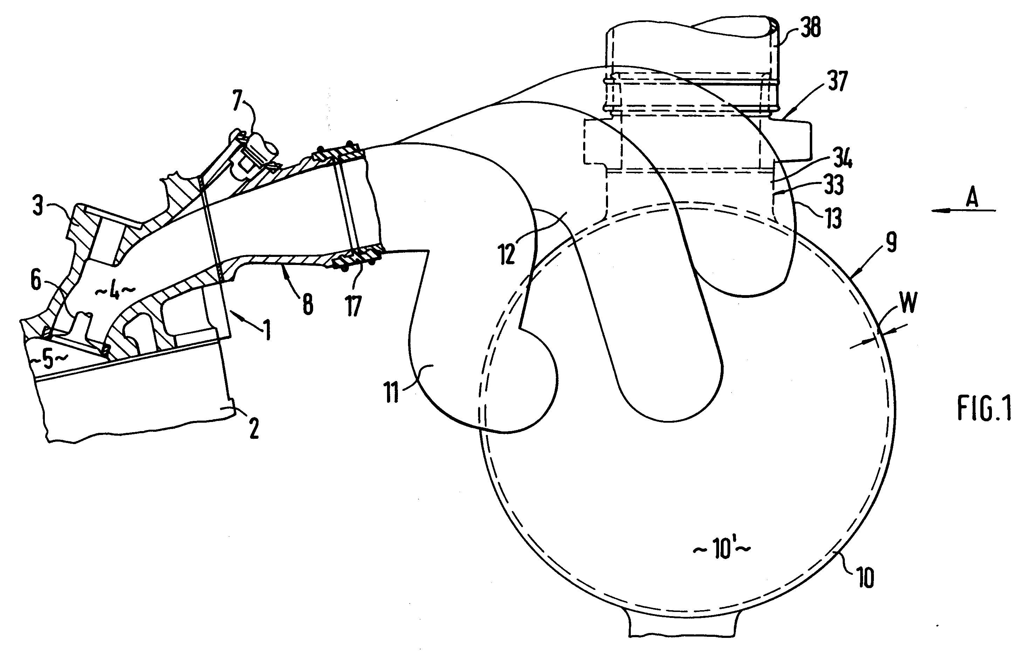

Fig. 1     einen Teilquerschnitt einer Brennkraftmaschine mit der erfindungsgemäßen Ansauganlage,

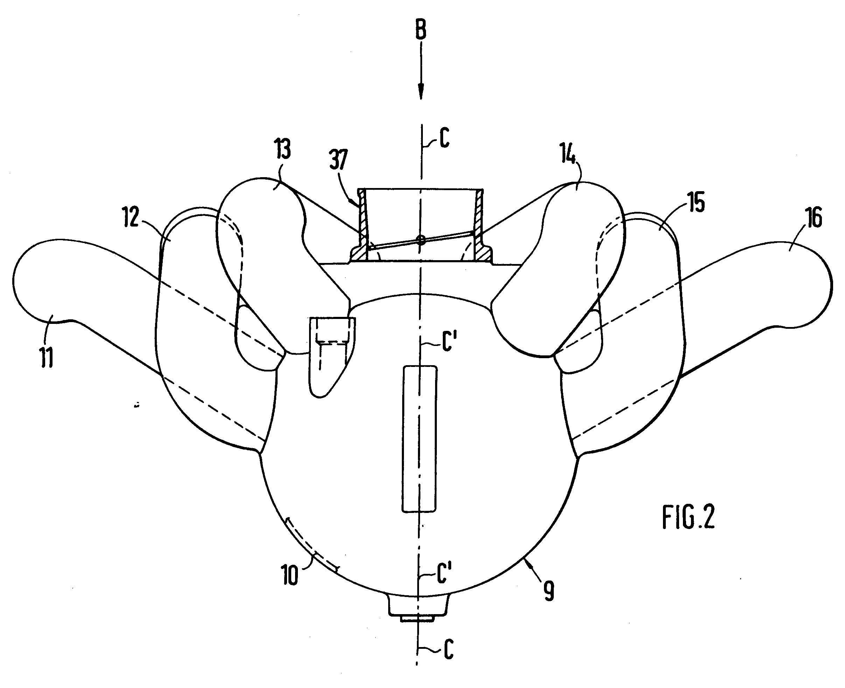

Fig. 2     eine Ansicht in Pfeilrichtung A der Fig. 1 in kleinerem Maßstab,

Fig. 3     eine Ansicht in Pfeilrichtung B der Fig. 2,

Fig. 4     einen Schnitt nach der Linie IV-IV der Fig. 3,

Fig. 5     einen Schnitt nach der Linie V-V der Fig. 3,

Fig. 6     einen Schnitt durch die Saugrohranlage im Übergangsbereich Saugrohr - Sammler,

Fig. 7     eine Ansicht entsprechend Fig. 6 einer anderen Ausführungsform,

Fig. 8     eine schematische Darstellung der Brennkraftmaschine mit der Ansauganlage.

Die mehrzylindrige Brennkraftmaschine 1 der Hubkolbenbauart arbeitet im Viertakt-Verfahren und umfaßt ein Kurbelgehäuse 2 und einen Zylinderkopf 3. Sie weist sechs in Reihe angeordnete Zylinder auf und ist im wesentlichen aufrecht in ein nicht gezeigtes Kraftfahrzeug, beispielsweise Personenwagen, eingebaut.

Der Zylinderkopf 3 besitzt pro Zylinder wenigstens einen Saugkanal 4, über den ein Kraftstoffluftgemisch in einen Brennraum 5 gelangt. Die arbeitstaktgerechte Zuführung des Kraftstoffluftgemischs zum Brennraum 5 erfolgt mittels eines Hubventils 6, das über eine nicht gezeigte Nockenwelle vom Zylinderkopf 3 aus betätigt wird.

Bei 7 ist ein Kraftstoffeinspritzventil angedeutet, das in ein mit dem Zylinderkopf 3 verschraubtes Zwischenstück 8 eingesetzt ist. Das Zwischenstück 8 erstreckt sich seitlich vom Zylinderkopf 3 und ist mit einer Ansauganlage 9 verbunden. Die Ansauganlage 9 umfaßt einen behälterartigen Sammler 10, von dem aus Saugrohre 11, 12, 13 und 14, 15, 16 weggeführt sind. Die Saugrohre 11, 12, 13 und 14, 15, 16 sind mittels muffenartiger elastischer Verbindungselemente 17 an das Zwischenstück 8 angeschlossen; Verbindungselemente entsprechend den vorstehenden sind in der DE-P 36 41 811 näher beschrieben.

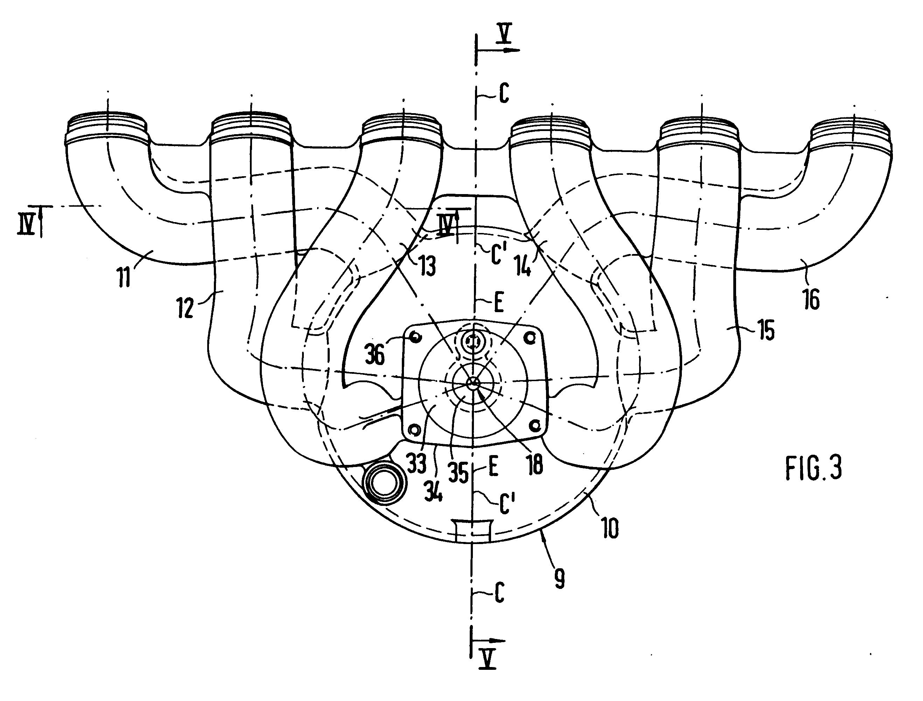

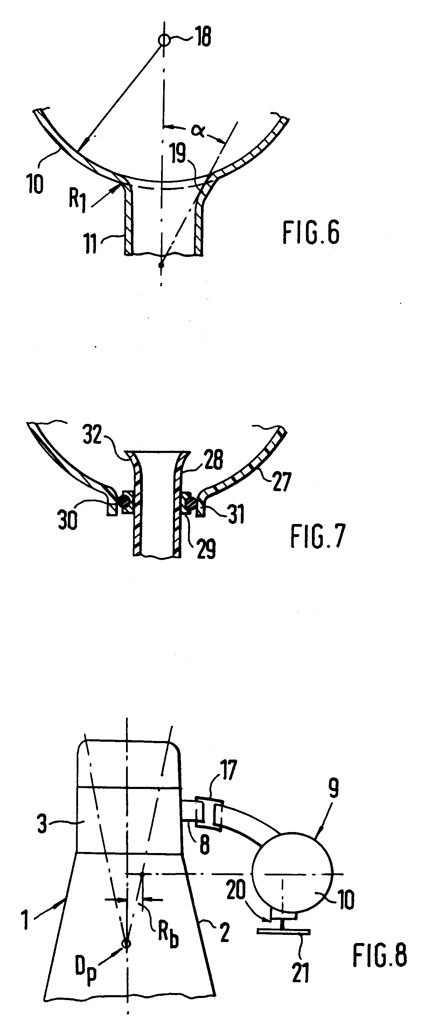

Die Form des gesamten Sammlers 10, d.h. Innenfläche und äußere Oberfläche, entspricht einer Kugel, die ein Zentrum 18 besitzt. Der Innenraum des Sammlers 10 ist mit 10′ bezeichnet; die Wandstärke W der Kugel ist im wesentlichen konstant. Die Saugrohre 11, 12, 13 und 14, 15, 16 weisen im wesentlichen gleiche Längen auf und sind derart mit dem Sammler 10 verbunden, daß sie mit ihren Mittellinien auf das Zentrum 18 ausgerichtet sind (Fig. 3 und 6). Mögliche Verbindungen der Saugrohre, beispielsweise mit dem Sammler 10, sind in Fig. 6 dargestellt. Danach kann das Saugrohr 11 mit dem Radius $R_1$ oder aber der trichterförmigen Anfasung 19 in die Wand W des Sammlers 10 übergehen; die Anfasung 19 ist durch den Winkel $\alpha$ definiert.

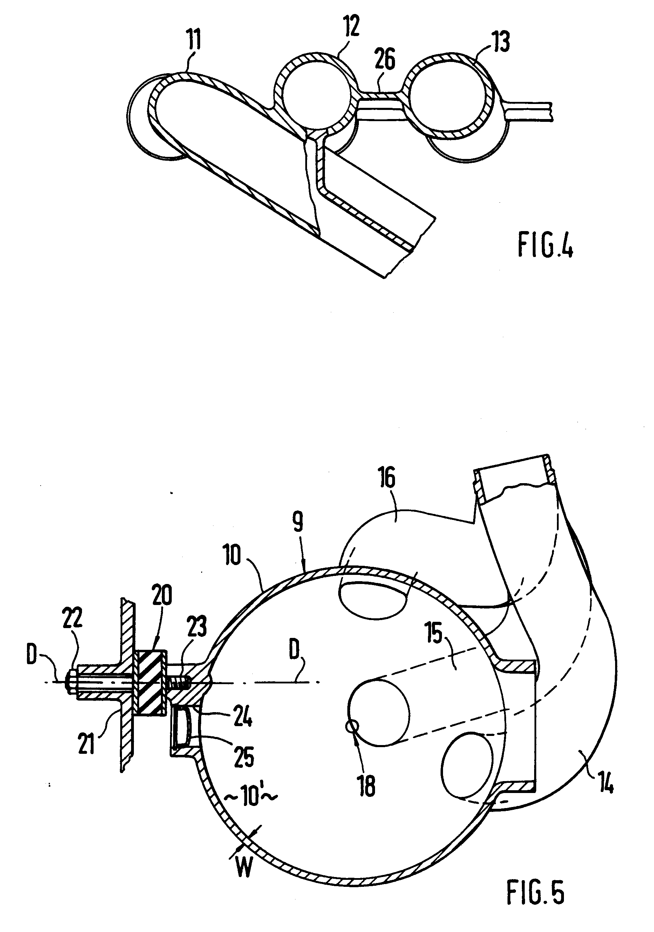

Gleiche Längen der Saugrohre 11, 12, 13 und 14, 15, 16 lassen sich dann auf einfache Weise realisieren, wenn eine Mittelquerebene C-C der Brennkraftmaschine 1 eine Kugelhalbierende C′-C′ des Sammlers 10 einschließt. Sofern der Sammler 10 seitlich der Brennkraftmaschine 1 etwa auf Höhe zwischen Kurbelgehäuse 2 und Zylinderkopf 3 angeordnet ist, sind die Relativbewegungen $R_b$ der Brennkraftmaschine 1 um ihren Drehpunkt $D_p$ gegenüber der Ansauganlage 9 gering (Fig. 8). Dadurch läßt sich eine von der Brennkraftmaschine 1 entkoppelte Lagerung der Ansauganlage 9 verwirklichen. Diese Lagerung wird einerseits durch die Verbindungselemente 17 und andererseits mittels eines elastischen Gliedes 20 gebildet, auf dem sich der Sammler 10 mit seiner Unterseite abstützt. Das Glied 20 ist an einem festen Teil 21 des Kraftfahrzeugs mittels einer Schraube 22 befestigt. Außerdem ist es in ein Gewinde 23 des Sammlers 10 eingedreht. Das elastische Glied 20 greift in der Nahe einer senkrechten Schwerpunktlinie D-D der Ansauganlage 9 am Sammler 10 an (Fig. 5). Benachbart dem elastischen Glied 20 ist eine Öffnung 24 am Sammler 10 für einen Gußkern vorgesehen, wobei in die Öffnung 24 ein Verschlußdeckel 25 eingesetzt ist.

Wird der Sammler 10 derart an die Saugrohre 11, 12, 13 und 14, 15, 16 angeschlossen, daß er an letzteren hängt, so werden räumlich günstige Voraussetzungen geschaffen.

Gemäß der Fig. 4 und 6 besteht die Ansauganlage 9 aus einem metallischen oder Kunststoff-Guß, d.h. die Saugrohre 11, 12, 13 und 14, 15, 16 sind aus einem Stück mit dem Sammler hergestellt. Dabei sind zumindest ein Teil der Saugrohre, nämlich 12 und 13 - Fig. 4 - über einen Steg 26 miteinander verbunden.

Es besteht aber auch die Möglichkeit, den Sammler 27 und Saugrohre 28 getrennt voneinander, beispielsweise aus Kunststoff, herzustellen (Fig. 7). Dabei sind die Saugrohre 28 unter Vermittlung von Lagern 29 und Dichtkörpern 30 in halsartige Aufnahmen 31 des Sammlers 27 eingesetzt. Die Saugrohre 28 ragen mit Einlauftrichtern 32 in den Sammler 27 hinein. In diesem Ausführungsbeispiel können zwei beiderseits der Kugelhalbierenden C′-C′ des Sammlers 10 angebrachte Saugrohre 11 und 16, 12 und 15, 13 und 14 gleiche Gestalt aufweisen oder Gleichteile sein.

Die Brennkraftmaschine 1 die ja sechs Zylinder in Reihenbauweise umfaßt, arbeitet mit der Zündfolge 1 - 5 - 3 - 6 - 2 - 4. In Abhängigkeit dieser Zündfolge wird über die Saugrohre 11, 15; 13, 16; 12, 14, die jeweils beiderseits der Kugelhalbierenden C′-C′ angebracht sind, wechselweise Luft zu den Zylindern geführt.

Der Sammler 10 besitzt an seiner Oberseite einen Lufteintrittsstutzen 33, der auf einer Mittelebene E-E auf der Kugelhalbierenden C′-C′ liegt (Fig. 3). Der Lufteintrittstutzen 33 wird durch einen Kragen 34 gebildet, der mit einer kreisförmigen Öffnung 35 versehen ist. Außerdem sind am Kragen 34 Gewindebohrungen 36 zur Befestigung eines Drosselklappenstutzens 37 vorgesehen. Schließlich ist der Drosselklappenstutzen 37 mit einem Rohrstück 38 versehen, das zu einem nicht gezeigten Luftfilter der Brennkraftmaschine 1 führt.

**Patentansprüche**

1. Ansauganlage für eine mehrzylindrige Brennkraftmaschine mit einem behälterartigen Sammler, von dem aus Saugrohre weggeführt sind, die mittelbar oder unmittelbar an einen Zylinderkopf anschließen, dadurch gekennzeichnet, daß die Form des gesamten Sammlers (10), insbesondere seiner einen Innenraum (10′) begrenzenden Innenfläche einer Kugel entspricht und die an den Sammler (10) angeschlossenen Saugrohre (11, 12, 13 und 14, 15, 16) mit ihren Mittellinien auf das Zentrum (18) der Kugel ausgerichtet sind, wobei die Saugrohre (11, 12, 13 und 14, 15, 16) vom Innenraum (10′) der Kugel aus die Zylinder der Brennkraftmaschine (1) mit Luft versorgen.

2. Ansauganlage nach Anspruch 1 für eine Brennkraftmaschine der Hubkolbenbauart mit wenigstens zwei Zylindern in Reihe, dadurch gekennzeichnet, daß eine Mittelquerebene (C-C) der Brennkraftmaschine (1) eine Kugelhalbierende (C′-C′) des Sammlers (10) einschließt.

3. Ansauganlage nach Anspruch 2, dadurch gekennzeichnet, daß der Sammler (10) seitlich der Brennkraftmaschine (1) angeordnet ist.

4. Ansauganlage nach den Ansprüchen 2 und 3, dadurch gekennzeichnet, daß die Saugrohre (11, 12, 13 und 14, 15, 16) im wesentlichen gleich lang sind.

5. Ansauganlage nach einem der Ansprüche 1 bis 4, dadurch gekennzeichnet, daß der Sammler (10) und die Saugrohre (11, 12, 13 und 14, 15, 16) aus einem Stück, beispielsweise eisenmetallischem oder Kunststoff-Guß, hergestellt sind.

6. Ansauganlage nach Anspruch 5, dadurch gekennzeichnet, daß zumindest ein Teil der Saugrohre (12, 13) über Stege (26) miteinander verbunden sind.

7. Ansauganlage nach einem der Ansprüche 1 bis 4, dadurch gekennzeichnet, daß der Sammler (27) und die Saugrohre (28) separat hergestellte Teile sind.

8. Ansauganlage nach Anspruch 7, dadurch gekennzeichnet, daß die Saugrohre (28) unter Vermittlung von Lagern (29) und Dichtkörpern (30) in halsartige Aufnahmen (31) des Sammlers (27) eingesetzt sind.

9. Ansauganlage nach den Ansprüchen 7 und 8, dadurch gekennzeichnet, daß d.ie Saugrohre (28) mit einem Einlauftrichter (32) in den Sammler (27) hineinragen.

10. Ansauganlage nach einem der vorangehenden Ansprüche, dadurch gekennzeichnet, daß zumindest zwei beiderseits der Kugelhalbierenden (C′-C′) am Sammler (27) angebrachte Saugrohre (11 und 16; 12 und 15; 13 und 14) im wesentlichen gleiche Gestalt aufweisen.

11. Ansauganlage nach einem der vorangehenden Ansprüche, dadurch gekennzeichnet, daß in Abhängigkeit der Zündfolge der Brennkraftmaschine (1) über die Saugrohre (11, 15; 13, 16; 12, 14) die beiderseits der Kugelhalbierenden (C′-C′) am Sammler (10) angebracht sind, wechselweise Luft den Zylindern der Brennkraftmaschine (1) zugeführt wird.

12. Ansauganlage nach Anspruch 1, dadurch gekennzeichnet, daß der Sammler (10) einen Lufteintrittsstutzen (33) aufweist, der mit auf einer Mittelebene (E-E) auf der Kugelhalbierenden (C′-C′) liegt.

13. Ansauganlage nach Anspruch 12, dadurch gekennzeichnet, daß der Lufteintrittsstutzen (33) durch einen Kragen (34) mit kreisförmiger Öffnung (35) gebidlet wird, wobei der Kragen (34) Gewindebohrungen (36) zur Befestigung eines Drosselklappenstutzens (37) aufweist.

14. Ansauganlage nach einem der vorangehenden Ansprüche, wobei die Brennkraftmaschine im wesentlichen aufrecht stehend in ein Kraftfahrzeug eingebaut ist, dergestalt, daß der Zylinderkopf oberhalb eines Kurbelgehäuses verläuft, dadurch gekennzeichnet, daß die Saugrohre (11, 12, 13 und 14, 15, 16) von oben an den Sammler (10) herangeführt sind, derart, daß der Sammler (10) an den Saugrohren (11, 12, 13 und 14, 15, 16) hängt.

15. Ansauganlage nach Anspruch 14, dadurch gekennzeichnet, daß die freie Seite der Saugrohre (11, 12, 13 und 14, 15, 16) unter Vermittlung von elastischen muffenartigen Verbindungselementen (17) an einem am Zylinderkopf (3) befestigten Zwischenstück (8) gehalten ist und daß der Sammler (10) an seiner Unterseite mittels eines elastischen Gliedes (20) an einem festen Teil (21) des Kraftfahrzeugs abgestützt ist.

16. Ansauganlage nach Anspruch 15, dadurch gekennzeichnet, daß das elastische Glied (20) in der Nähe einer senkrechten Schwerpunktlinie (B-B) der Ansauganlage (9) angreift.

**Claims**

1. An intake device for a multiple-cylinder internal combustion engine having a container-like collector, intake pipes leading away from the said collector and being directly or indirectly connected to a cylinder head, characterized in that the shape of the collector (10) as a whole, in particular its inner surface bounding an inner space (10'), corresponds to a sphere and the intake pipes (11, 12, 13 and 14, 15, 16) connected to the collector (10) are orientated with their median lines towards the centre (18) of the sphere, the intake pipes (11, 12, 13 and 14, 15, 16) from the inner space (10') of the sphere supplying the cylinders of the internal combustion engine (1) with air.

2. An intake device according to Claim 1 for an internal combustion engine of the reciprocating-piston type with at least two cylinders in line, characterized in that a median transverse plane (C-C) of the internal combustion engine (1) includes a bisectrix (C'-C') of the collector (10).

3. An intake device according to Claim 2, characterized in that the collector (10) is arranged laterally of the internal combustion engine (1).

4. An intake device according to Claims 2 and 3, characterized in that the intake pipes (11, 12, 13 and 14, 15, 16) are substantially of equal length.

5. An intake device according to any one of Claims 1 to 4, characterized in that the collector (10) and the intake pipes (11, 12, 13 and 14, 15, 16) are produced in one piece, for example a ferrous-metal or plastics casting.

6. An intake device according to Claim 5, characterized in that at least some of the intake pipes (12, 13) are connected together by webs (26).

7. An intake device according to any one of Claims 1 to 4, characterized in that the collector (27) and the intake pipes (28) are separately produced parts.

8. An intake device according to Claim 7, characterized in that the intake pipes (28) are inserted in neck-like receiving means (31) in the collector (27) with the interposition of bearings (29) and sealing members (30).

9. An intake device according to Claims 7 and 8, characterized in that the intake pipes (28) project with an inlet funnel (32) into the collector (27).

10. An intake device according to any one of the preceding Claims, characterized in that at least two intake pipes (11 and 16; 12 and 15; 13 and 14) mounted on the collector (27) on both sides of the bisectrix (C'-C') of the sphere have substantially the same design.

11. An intake device according to any one of the preceding Claims, characterized in that air is alternately supplied to the cylinders of the internal combustion engine (1) as a function of the ignition sequence of the internal combustion engine (1) by way of the intake pipes (11, 15; 13, 16; 12, 14) arranged on the collector (27) on both sides of the bisectrix (C'-C') of the sphere.

12. An intake device according to Claim 1, characterized in that the collector (10) has an air-entry socket (33) lying in a median plane (E-E) on the bisectrix (C'-C') of the sphere.

13. An intake device according to Claim 12, characterized in that the air-entry socket (33) is formed by a collar (34) with a circular opening (35), the collar (34) having threaded bores (36) for securing a butterfly-valve socket (37).

14. An intake device according to any one of the preceding Claims, the internal combustion engine being fitted standing substantially upright in a motor vehicle in such a way that the cylinder head extends above a crankcase, characterized in that the intake pipes (11, 12, 13 and 14, 15, 16) are brought to the collector (10) from above in such a way that the collector (10) is suspended on the intake pipes (11, 12, 13 and 14, 15, 16).

15. An intake device according to Claim 14, characterized in that the free end of the intake pipes (11, 12, 13 and 14, 15, 16) is held with the interposition of resilient sleeve-like connexion members (17) on an intermediate member (8) secured to the cylinder head (3), and the collector (10) is supported with its underside on a fixed part (21) of the motor vehicle by means of a resilient member (20).

16. An intake device according to Claim 15, characterized in that the resilient member (20) engages in the vicinity of a vertical line of gravity (B-B) of the intake device (9).

**Revendications**

1. Dispositif d'admission pour moteur à combustion interne à plusieurs cylindres, avec un collecteur en forme de récipient, d'où sont tirés les pipes d'admission, qui se raccordent indirectement ou directement à une culasse, caractérisé en ce que la forme de l'ensemble du collecteur (10), en particulier de sa surface intérieure, délimitant un espace intérieur (10'), correspond à une sphère et les pipes d'admission (11,12,13 et 14,15,16) raccordées au collecteur sont orientées avec leurs axes dirigés sur le centre (18) de la sphère, les pipes d'admission (11,12,13 et 14,15,16) alimentant en air les cylindres du moteur (1), depuis l'espace intérieur (10') de la sphère.

2. Dispositif d'admission selon la revendication 1, pour un moteur à combustion interne du type à piston et d'au moins deux cylindres en ligne, caractérisé en ce qu'un plan transversal médian (C-C) du moteur à combustion interne (1) forme une bissectrice de sphère (C'-C') du collecteur (10).

3. Dispositif d'admission selon la revendication 2, caractérisé en ce que le collecteur (10) est disposé sur le côté du moteur (1).

4. Dispositif d'admission selon les revendications 2 et 3, caractérisé en ce que les pipes d'admission (11,12,13 et 14,15,16) sont de longueur sensiblement égales.

5. Dispositif d'admission selon l'une des revendications 1 à 4, caractérisé en ce que le collecteur (10) et les pipes d'admission (11,12,13 et 14,15,16) sont fabriqués d'un seul tenant, par exemple par moulage en matériau ferreux ou en matière synthétique.

6. Dispositif d'admission selon la revendication 5, caractérisé en ce qu'au moins une partie des pipes d'admission (12,13) est reliée par des nervures (26).

7. Dispositif d'admission selon l'une des revendications 1 à 4, caractérisé en ce que le collecteur (27) et les pipes d'admission (28) sont des pièces fabriquées séparément.

8. Dispositif d'admission selon la revendication 7, caractérisé en ce que les pipes d'admission (28) sont insérés dans des logements (31) à encolure du collecteur (27), avec entremise de supports (29) et de garnitures d'étanchéité (30).

9. Dispositif d'admission selon les revendications 7 et 8, caractérisé en ce que les pipes d'admission (28) pénètrent dans le collecteur (27) par un entonnoir d'entrée (32).

10. Dispositif d'admission selon l'une des revendications précédentes, caractérisé en ce qu'au moins deux pipes d'admission (11 et 16; 12 et 15; 13 et 14), montées des deux côtés de la bissectrice de sphère (C'-C'), sur le collecteur (27), présentent une forme sensiblement identique.

11. Dispositif d'admission selon l'une des revendications précédentes, caractérisé en ce qu'en fonction de l'ordre d'allumage du moteur à combustion interne (1), il est amené alternativement de l'air aux cylindres du moteur à combustion interne (1), par les pipes d'admission (11,15;13,16;12,14) montées des deux côtés de la bissectrice de sphère (C'-C') sur le collecteur (10).

12. Dispositif d'admission selon la revendication 1, caractérisé en ce que le collecteur (10) présente une tubulure d'entrée d'air (33) située avec un plan médian (E-E) dans la bissectrice de sphère (C'-C').

13. Dispositif d'admission selon la revendication 12, caractérisé en ce que la tubulure d'entrée d'air (33) est formée par une collerette (34) à ouverture circulaire (35), la collerette (34) présentant des taraudages (36) pour la fixation d'une tubulure de papillon d'étranglement (37).

14. Dispositif d'admission selon l'une des revendications précédentes, le moteur étant monté en position sensiblement verticale dans un véhicule automobile, de telle façon que la culasse se trouve au-dessus d'un bloc cylindre, caractérisé en ce que les pipes d'admission (11,12,13 et 14,15,16) sont amenée par le dessus sur le collecteur (10), de façon que ce dernier soit suspendu aux pipes d'admission (11,12,13 et 14,15,16).

15. Dispositif d'admission selon la revendication 14, caractérisé en ce que la côté libre des pipes d'admission (11,12,13 et 14,15,16) est maintenu sur une pièce intermédiaire (8) fixée sur la culasse (3), par l'entremise d'éléments de liaison élastiques (17) en forme de manchon et que le collecteur (10) est appuyé en face inférieure sur une partie fixe (21) du véhicule automobile, au moyen d'un organe élastique (20).

16. Dispositif d'admission selon la revendication 15, caractérisé en ce que l'organe élastique (20) est en contact à proximité de la ligne de centre de gravité (B-B) de la conduite d'admission.

FIG.1

FIG.2

EP 0 319 685 B1

FIG.3

FIG.4

FIG.5

FIG.6

FIG.7

FIG.8